# EUROPÄISCHE PATENTANMELDUNG

(11) **EP 0 569 783 A1**
(43) Veröffentlichungstag der Anmeldung: **18.11.1993**
(21) Anmeldenummer: 93106934.8
(22) Anmeldetag: 29.04.1993
(51) Int. Cl.: G01J 5/08

(54) **Wärmebildgerät mit Tarnvorrichtung**

(30) Priorität: 02.05.1992 DE 4214621
(71) Anmelder: Firma Carl Zeiss, D-73446 Oberkochen (DE); CARL-ZEISS-STIFTUNG, HANDELND ALS CARL ZEISS, D-73446 Oberkochen (DE)
(72) Erfinder: Wallrabe, Arnulf, D-56057 Koblenz (DE)

(57) **Zusammenfassung**

Es wird eine Einrichtung vorgeschlagen, die zu einer von einem gekühlten Detektor (3) eines Wärmebildgeräts (7) ausgestrahlten Strahlung (31), die wesentlich unter der Umgebungsstrahlung (121) liegt, eine solche zweite Strahlung (111) hinzufügt, daß der Kontrast von Wärmebildgerätestrahlung (31, 111) und Umgebungsstrahlung (121) minimiert ist. Integriert oder als Adapter (20).

## Beschreibung

Die Erfindung bezieht sich auf ein Wärmebildgerät mit gekühltem Detektor.

In Wärmebildgeräten wird die von allen Gegenständen ausgesandte temperaturabhängige Wärmestrahlung - Licht im infraroten Spektralbereich - zur Abbildung bei eingeschränkten Sichtverhältnissen durch z.B. Dunst oder Dunkelheit benutzt.

Die meisten Detektormaterialien erfordern, daß der Detektor auf eine tiefe Temperatur (z.B. 80 K) gekühlt wird, d.h. auf eine Temperatur, die ca. 200 K unter der Temperatur liegt, die sich durchschnittlich aus der wärmestrahlenden Umgebung des Wärmebildgerätes ergibt.

Dieser große Temperaturunterschied verursacht den Nachteil, daß ein Beobachter, der seinerseits mit einem Wärmebildgerät ausgerüstet ist und ein anderes Wärmebildgerät betrachtet, dessen Strahlung des gekühlten Detektors als auffälligen kalten Fleck in der Szene wahrnimmt.

Besonders stark wirkt sich dieser Nachteil aus, wenn die sich beobachtenden Geräte dem Typ angehören, bei dem der Detektor aus weniger Elementen besteht als dem Bildfeld entsprechen und das Bild erst durch Scannen der empfangenen Wärmestrahlung mittels eines Strahl-Ablenkmittels über diese Detektoreinzelelemente entsteht (scannendes Wärmebildgerät).

In diesem Fall blinkt der Fleck wegen der periodischen Bewegung der Strahl-Ablenkmittel, die so abwechselnd einen Blick auf den kalten Detektor und das wärmere Geräteinnere freigeben.

Da das Auge sehr empfindlich solche periodischen Änderungen wahrnimmt, wird das Wärmebildgerät schnell entdeckt.

Der Erfindung liegt die Aufgabe zugrunde, ein Wärmebildgerät mit einer Tarnvorrichtung zu versehen, die verhindert, daß es von beobachtenden Wärmebildgeräten wegen seiner zur betrachteten Szene kontrastierenden Strahlung des gekühlten Detektors entdeckt werden kann.

Die Lösung gelingt mit der im Anspruch 1 angegebenen Maßnahme.

Da der Kontrast durch das Strahlungsdefizit des gekühlten Detektors bezüglich des Strahlungsniveaus der Umgebung entsteht, sieht es die Erfindung vor, eine zweite Strahlung als Ergänzung zu der vom Detektor ausgehenden hinzuzufügen. Damit kann die Summe der das Wärmebildgerät verlassenden Strahlung der Umgebungsstrahlung angeglichen werden.

Es ist vorteilhaft, die zweite Strahlung durch einen Glühkörper zu erzeugen. Eine wirtschaftliche Lösung ist eine Halogenglühlampe, deren glühende Wendel die in den meisten Fällen erforderliche Temperatur von 3000 K aufweist.

Selbstverständlich sind andere Wärmequellen ebenfalls geeignet, wenn sie in der Lage sind, die erforderliche Differenzsstrahlung zu emittieren.

Vorteilhaft überlagert ein teildurchlässiger Spiegel die Strahlung des Detektors und die zweite Strahlung, wobei dieser bei einem scannenden Wärmebildgerät zweckmäßigerweise zwischen Detektor und Strahlen-Ablenkmittel angeordnet wird. Damit wird erreicht, daß die zweite Strahlung richtungsgleich mit der Strahlung des Detektors bewegt wird.

Zur genaueren Angleichung der das Wärmebildgerät verlassenden Gesamtstrahlung an die Umgebungsstrahlung ist es möglich, die Leistung der Strahlungsquelle abhängig von der von einem Sensor ermittelten Umgebungsstrahlung oder Umgebungstemperatur zu steuern. Dies schließt bei höheren Ansprüchen auch die Regelung mittels eines vor dem Objektiv angebrachten Sensors mit ein, der auch die vom Wärmebildgerät emittierte Strahlung mitberücksichtigt.

Der beste Erfolg wird erreicht, wenn die Strahlung des gekühlten Detektors zusammen mit der überlagerten zweiten Strahlung der Umgebungsstrahlung möglichst gleich ist, nach Spektrum, Intensität und Richtungsverteilung.

Für scannende Geräte ist es bei geringeren Ansprüchen an die Tarnung akzeptabel, auf das Ablenken der zweiten Strahlung zu verzichten, wenn diese auf einen solchen Helligkeitswert angehoben wird, daß die Gesamthelligkeit um den Mittelwert der Umgebungsstrahlung sowohl nach dunkel wie nach hell pulsiert. Der sich ergebende Blinkeffekt auf einem beobachtenden Wärmebildgerätemonitor ist dann deutlich geringer als ein Fleck, der von der Umgebungshelligkeit zu "dunkel" blinkt.

Die Ausführung nach Anspruch 7 ergibt bei scannenden Wärmebildgeräten die einfachste Synchronisation der beiden Strahlungen.

Die Vereinigung von Detektor- und Strahlenquellenstrahlung im Inneren des Wärmebildgerätes kann sehr kostenintensiv sein. Bei schon in Benutzung befindlichen Geräten ist eine Nachrüstung im Gerätestrahlengang so gut wie ausgeschlossen. Hier hilft ein Adapter nach Anspruch 11, der die zweite Strahlung erzeugt und im mit dem Wärmebildgerät zusammengebauten Zustand die erfindungsgemäße Überlagerung der Strahlungen bewirkt.

Besonders im Zusammenhang damit sind die Merkmale der Ansprüche 8 - 10 vorteilhaft und erlauben einfache Ausführungen.

Im folgenden wird die Erfindung anhand der Zeichnung näher erläutert.
- Figur 1: zeigt ein scannendes Wärmebildgerät mit integrierter Strahlungsquelle für die zweite Strahlung höherer Strahlungstemperatur;
- Figur 2: zeigt einen mit einem Wärmebildgerät zusammengebauten erfindungsgemäßen Adapter.

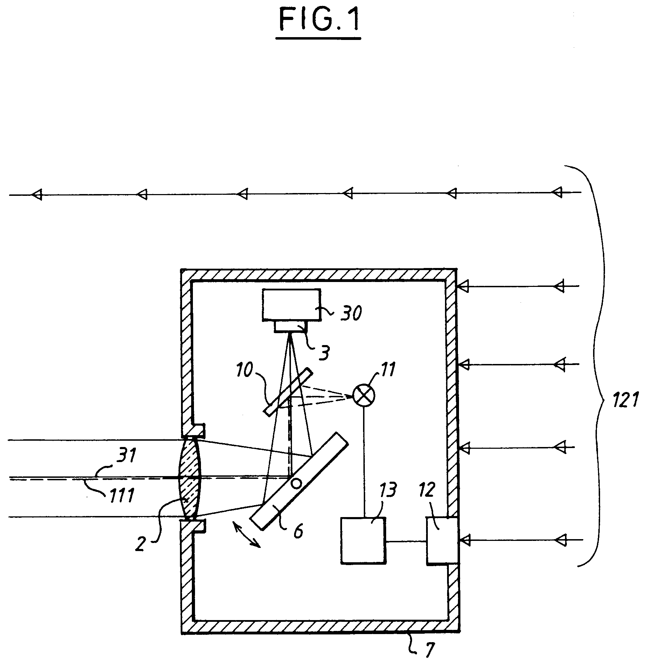

Die Figur 1 zeigt zunächst die Hauptbestandteile eines bekannten scannenden Wärmebildgeräts (7), nämlich Objektiv (2), Strahlen-Ablenkelement (6), dargestellt als Schwingspiegel, und Detektor (3) mit Kühleinrichtung (30). Der Detektor (3) ist typisch auf etwa 80 K abgekühlt und emittiert daher Strahlung (31) etwa als schwarzer Strahler dieser niedrigen Temperatur. Auf dem Abbildungsstrahlengang umgekehrtem Wege wird diese Strahlung einem äußeren Detektor, also insbesondere einem zweiten Wärmebildgerät, in der Objektebene sichtbar.

Eine zusätzlich eingebaute Strahlungsquelle (11), z.B. eine Halogenglühlampe mit typisch 3000 K Strahlungstemperatur, emittiert die zweite Strahlung (111), welche mittels des teildurchlässigen Spiegels (10) zwischen Detektor (3) und Schwingspiegel (6) der Strahlung (31) des Detektors (3) überlagert wird. Durch die Anordnung des teildurchlässigen Spiegels (10) wird erreicht, daß die überlagerten Strahlungen (31) und (111) synchron über das Objektiv (2) in die Objektebene abgebildet werden. Dort ist nun also nur noch die Summe der Strahlungen (31) und (111) sichtbar, die sich von der Untergrundstrahlung (121) zumindest nur noch wenig unterscheidet. Statt einer Glühlampe kann ohne weiteres auch die gebündelte Strahlung eines ohnehin im Wärmebildgerät (7) vorhandenen warmen Teils verwendet werden, z.B. die Abwärme der Kühleinrichtung (30).

Durch bekannte, nicht dargestellte Blenden und optische Elemente kann die zweite Strahlung (111) in Richtung, Divergenz, Intensität usw. der Strahlung (31) des Detektors (3) angepaßt werden.

Ein als Option vorgesehener Sensor (12) mit einer Steuereinrichtung (13) erlaubt es, die Untergrundstrahlung (121), oder in einer einfacheren Ausführung als Temperaturfühler die Umgebungstemperatur, zur optimalen Anpassung der zweiten Strahlung (111) der Strahlungsquelle (11) und damit der Summe der Strahlungen (111) und (31) auszunutzen.

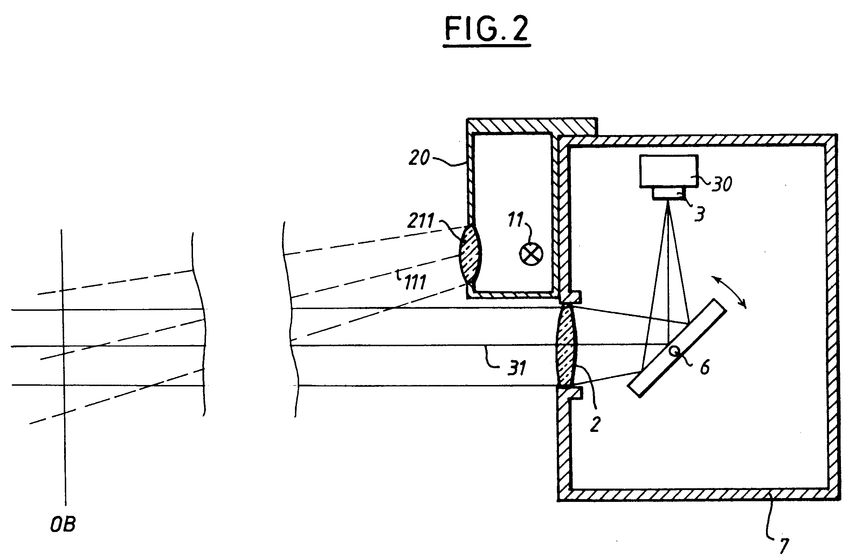

In der Figur 2 ist an das oben beschriebene Wärmebildgerät (7) mit Objektiv (2), Schwingspiegel (6), Detektor (3), Kühleinrichtung (30) und emittierter Strahlung (31) ein Adapter (20) angesetzt. Dieser enthält eine Strahlungsquelle (11) wie oben beschrieben und eine Projektionsoptik (211), welche die erfindungsgemäße zweite Strahlung (111) neben dem Objektiv (2) so abstrahlen, daß im Bereich der Objektebene (OE) des Wärmebildgeräts (7) die Strahlungen (31) und (111) überlagert werden. Die Strahlungstemperatur und Intensität der zweiten Strahlung (31) ist über die der Umgebung angehoben, so daß die Überlagerung der fest ausgerichteten zweiten Strahlung (111) mit der scannenden Strahlung (31) des gekühlten Detektors (3) eine symmetrisch um die Umgebungsstrahlung oszillierende Strahlungsverteilung ergibt, die in einem beobachtenden Wärmebildgerät unauffällig ist.

Natürlich kann der Adapter (20) aber auch eine eigene Scaneinrichtung haben, die zu der des Wärmebildgeräts (7) synchronisiert ist. Ebenso kann die zweite Strahlung (111) durch einen teildurchlässigen Spiegel in den Strahlengang der Strahlung (31) vor dem Objektiv (2) eingespiegelt werden, oder die zweite Strahlung (31) kann ringförmig koaxial zum Objektiv (2) aus dem entsprechend gestalteten Adapter (20) abgestrahlt werden.

Die Mittel zum Überlagern der zweiten Strahlung (31), wie in Figur 1 beschrieben oder der Adapter (20) wie in Figur 2 dargestellt, bilden also in allen dem Fachmann offensichtlichen Varianten eine Tarnvorrichtung für das Wärmebildgerät (7), das dessen Auffindbarkeit wesentlich reduziert.

## Patentansprüche

1. Wärmebildgerät (7) mit gekühltem Detektor (3), dadurch gekennzeichnet, daß der aus dem Wärmebildgerät (7) austretenden Strahlung (31) des Detektors (3) eine zweite Strahlung (111) mit höherer Strahlungstemperatur überlagert wird.

2. Wärmebildgerät (7) nach Anspruch 1, dadurch gekennzeichnet, daß die zweite Strahlung (111) von einem Glühkörper (11) erzeugt wird.

3. Wärmebildgerät (7) nach Anspruch 1 oder 2, dadurch gekennzeichnet, daß ein teildurchlässiger Spiegel (10) die Strahlung (31) des Detektors (3) und die zweite Strahlung (111) überlagert.

4. Wärmebildgerät (7) nach mindestens einem der Ansprüche 1-3, gekennzeichnet durch einen Sensor (12) für die Umgebungsstrahlung (121) oder die Umgebungstemperatur und eine Steuereinrichtung (13), welche die zweite Strahlung (111) abhängig von der Umgebungsstrahlung (121) oder Umgebungstemperatur steuert.

5. Wärmebildgerät (7) nach mindestens einem der Ansprüche 1-4, dadurch gekennzeichnet, daß die Strahlung (31) des Detektors (3) zusammen mit der überlagerten zweiten Strahlung (111) einer Umgebungsstrahlung (121) gleich ist.

6. Wärmebildgerät (7) nach mindestens einem der Ansprüche 1-5, dadurch gekennzeichnet, daß die Strahlung (31) des Detektors (3) zusammen mit der überlagerten zweiten Strahlung (111) gegenüber einer Umgebungsstrahlung (121), gesehen mit einem Wärmebildgerät nach dem Stand der Technik, mit teilweise größerer Intensität oszilliert.

7. Wärmebildgerät (7) nach mindestens einem der Ansprüche 1-6, dadurch gekennzeichnet, daß das Wärmebildgerät (7) Strahlen-Ablenkmittel (6) hat und die Strahlung (31) des Detektors (3) zwischen Detektor (3) und Strahlen-Ablenkmittel (6) mit der zweiten Strahlung (111) überlagert wird.

8. Wärmebildgerät (7) nach mindestens einem der Ansprüche 1-6, dadurch gekennzeichnet, daß die zweite Strahlung (111) außerhalb des Wärmebildgerätes (7) überlagert wird.

9. Wärmebildgerät (7) nach Anspruch 8, dadurch gekennzeichnet, daß die Strahlung (31) des Detektors (3) und die zweite Strahlung (111) synchron abgelenkt werden.

10. Wärmebildgerät (7) nach Anspruch 8 oder 9, dadurch gekennzeichnet, daß das Wärmebildgerät (7) ein Objektiv (2) hat und die zweite Strahlung (111) seitlich neben oder konzentrisch zum Objektiv (2) in Richtung der Strahlung (31) des Detektors (3) abgestrahlt wird.

11. Adapter (20) geeignet für den Zusammenbau mit einem Wärmebildgerät (7) mit gekühltem Detektor (3), dadurch gekennzeichnet, daß eine zusammengebaute Einheit von Adapter (20) und Wärmebildgerät (7) die Merkmale von mindestens einem der Ansprüche 1-10 hat.
